# EUROPEAN PATENT SPECIFICATION

(11) **EP 0 317 564 B1**
(45) Date of publication and mention of the grant of the patent: **19.05.1993**
(21) Application number: 87904914.6
(22) Date of filing: 30.07.1987
(51) Int. Cl.: F16D 3/72, F16D 3/74

(54) **FLEXIBLE COUPLING**
ELASTISCHE KUPPLUNG
ACCOUPLEMENT ELASTIQUE

(30) Priority: 31.07.1986 GB 8618711; 31.07.1986 GB 8618712; 31.07.1986 GB 8618713
(43) Date of publication of application: 31.05.1989
(73) Proprietor: HUNT, Anthony Owen, Leeds West Yorkshire LS17 0BQ (GB)
(72) Inventor: HUNT, Anthony Owen, Leeds West Yorkshire LS17 0BQ (GB)
(74) Representative: Orr, William McLean
(86) International application number: GB8700542
(87) International publication number: WO8801026

(56) References cited:
- FR-A- 364 769
- FR-A- 776 041
- FR-A- 1 501 311
- FR-A- 2 300 939
- FR-A-24 803 76
- US-A- 1 429 580
- US-A- 3 537 275
- US-A- 4 203 305

## Description

This invention relates to a flexible coupling of the type suitable for transmitting torque from one rotatable member to another and is particularly, though not exclusively, concerned with a flexible coupling for transmitting torque between driving and driven shafts in which there may be slight misalignments in the static and/or dynamic state.

There are many instances of use in which it is essential for a flexible coupling to be able to compensate automatically, by self-adjustment, for misalignment between driving and driven members, (and also to move laterally if required) and one of these uses includes the transmission of drives in industrial robots. Another use is in the formation of conductor lines on semi-conductor wafers, in which motors are used which drive suitable devices to form the lines, and in which extremely accurate control over the transmission of the drive is necessary, such drive normally including some form of flexible coupling. Another possibility is in car steering joints.

One known type of flexible coupling comprises a generally cylindrical member which is of one-piece construction, and which has a single start helical spring configuration formed in the cylindrical member. The cylindrical member is hollow, having a substantial radial wall thickness, and the spring configuration extends radially inwardly from the outer periphery of the cylindrical member until the hollow interior of the member is reached. The spring configuration may be formed by machining (a "cut spring"), or by casting of the entire cylindrical member with the required spring configuration. This known coupling member therefore functions in the manner of a helical spring, even although the turns of the spring have substantial radial thickness, and therefore has an in-built tendency to "wind-up" as torque is transmitted from one end of the cylindrical member to the other and via the turns of the helical spring. Clearly, this can give rise to inaccuracies in the transmission of torque, especially when, for example, precise angular increments of rotation are required from one rotary member to another.

Therefore, while the known flexible coupling has the necessary flexibility, and resilience, to accommodate axial misalignments (and axial movements), and also variable torque transmission, it does not have sufficient stiffness to suit the requirements of some users, and particularly where there is a need for very accurate transmission of angular increments of drive.

One known type of flexible coupling comprises a generally cylindrical member which is of one-piece construction, and which has a single start helical spring configuration formed in the cylindrical member. The cylindrical member is hollow, having a substantial radial wall thickness, and the spring configuration extends radially inwardly from the outer periphery of the cylindrical member until the hollow interior of the member is reached. The spring configuration may be formed by machining (a "cut spring"), or by casting of the entire cylindrical member with the required spring configuration. This known coupling member therefore functions in the manner of a helical spring, even although the turns of the spring have substantial radial thickness, and therefore the coupling member has an in-built tendency to "wind-up" as torque is transmitted from one end of the cylindrical member to the other and via the turns of the helical spring. Clearly, this can give rise to inaccuracies in the transmission of torque, especially when, for example, precise angular increments of rotation are required from one rotary member to another.

Another known type of flexible coupling is disclosed in GB Patent Specification No 1,206,537, which has a multi-start arrangement of helical slots formed through the wall of a cylindrical metal tube and which define three separate helical "beams" which extend circumferentially of the cylindrical metal tube in a spiral about the general longitudinal axis of the tube. Each beam forms a helical type spring, and the "starts" of the springs are circumferentially spaced from each other by 120^{o} and the turns of the three helical springs formed by the beam extend substantially parallel, and one within the other, as they extend in spirals about the axis of the cylindrical metal tube.

In the flexible coupling known from GB Patent Specification No 1,206,537, the radial extent of each beam, (which forms a respective helical spring extending circumferentially about the axis of the cylindrical tube), remains substantially constant. While these known flexible couplings perform generally satisfactorily for most purposes, it is a fact that, for arduous operating conditions, if the known flexible coupling should fail, any failure is likely to take place at the regions at which each helical beam starts its traverse about its periphery of the cylindrical tube i.e. at the region where the respective helical slot is first formed through the wall of the cylindrical tube, in that this is the region of maximum applied stress in service. Therefore, while the flexible coupling known from GB Patent Specification No 1,206,537 can provide a generally more accurate transmission of torque between driving and driven members, than with the single helical spring type of flexible coupling first referred to, in that it has more torsional stiffness by virtue of the three spring arrangement, it can be liable to failure at the starting point of any one of the three helical spring formations formed therein. The "start" region of each helical beam will be the region of maximum applied stress, in that it will be via this region that torsional loads are transmitted between each beam and the respective end piece of the cylindrical tube which will be coupled with a driving or driven member. In addition, there may be a tendency for flexure of the beam to take place about this region in service, and over a period of time the fatigue stress generated may also cause premature failure at this start region.

Therefore, given that the radial, and also the axial extent of each helical beam remains constant, there is normally unused torsional loading capacity provided in the turns of each helical beam intermediate the starts and finishes thereof. Further, if attempt should be made to strengthen the known coupling, by increasing the radial and / or axial extent of each helical beam, to provide additional strength at the starts and finishes, this will be an inefficient use of material, in that the intermediate turn portions of each helical beam will have still further unused torsional load capacity.

The present invention has therefore being developed primarily though not exclusively, with a view to providing an improvement to either of the two known types of flexible coupling referred to above, by virtue of alteration in the design of the parameters of the turn portions of the or each helical beam or spring, which are intermediate the starts and finishes thereof.

There has also developed a need to provide an improved design of flexible coupling which has sufficient flexibility and resilience to meet the requirements of a "flexible coupling", and yet which is able to transmit accurately i.e. without undue torsional deformation, rotation between an input and an output end of the coupling.

Another known type of flexible coupling disclosed in US 4,203,305 comprises a plurality of helical beams. The axial thickness of each turn of each helical beam is substantially constant along the length of the coupling.

According to the invention there is provided a flexible coupling which comprises a hollow body having an annular wall, and a helical spring configuration formed in the annular wall comprising at least two spring formations extending circumferentially and adjacent to each other around the axis of the body, each formation extending in a continuous spiral from a start to a finish, the start and finish of each spring formation being joined to an end piece of the hollow body comprising a solid annular wall, and the turns of the spring configuration each extending radially outwardly from the hollow interior of the body to the outer periphery of the body, characterized in that the turns of the spring configuration are axially thicker adjacent to said end pieces than the remaining turns thereof.

In order to increase the strength of each spring formation at its start and finish (where it is joined to the end pieces of the hollow cylindrical body), the turns are made thicker (with respect to the axis of the body), than the remaining turns thereof.

By arranging at least two separate helical spring formations in the annular wall of the cylindrical body, a coupling is provided which is sufficiently flexible in the sense that it can absorb any axial misalignment between an input drive to an input end of the cylindrical body and an output drive from an output end of the cylindrical body. and also any tendency for relative axial, and rotary, movement between the input and output drives. However, the helical spring formation is "stiffer" than the known single start (helical) flexible coupling, so that a more accurate, and less variable transmission of torque can take place between the input end and the output end.

If only two helical spring formations are provided, it will be preferable for the "starts" to be circumferentially spaced from each other by 180^{o}, and with similar angular spacing apart of the "finishes". If four helical spring formations are provided, then the relative angular separation of the circumferentially successive starts and finishes will be 90^{o}.

A particularly preferred embodiment of flexible coupling according to the invention has three helical spring formations formed in the annular wall, in which case the angular separation of successive starts and finishes will be 120^{o}. This is a particularly stable arrangement from a dynamic point of view. Conveniently, each start of one formation is angularly spaced from its respective finish by about 30^{o}.

The cylindrical body may be made of aluminium alloy, stainless steel or suitable plastics, or natural or synthetic rubber though for some uses customers are finding stainless steel to be particularly suitable.

Conveniently, the cylindrical body is formed as a turned body and then the required spring formation may be formed by machining on a programmed machine tool. However, the spring formations may be achieved in other ways, such as, for example, by casting, forging or electro-forming, or by laser cutting.

Alternatively, the spring formations may be formed initially by any suitable method, and then separate end pieces, in the form of plugs, may be attached one to each axial end of the spring formations. In a case in which the flexible coupling is required to transmit drive between a driving shaft and a driven shaft, the plugs may be formed so as to be capable of being coupled drivingly each with a respective shaft.

It should be understood that a flexible coupling according to the invention is not restricted solely to use for transmitting drive or torque between a driving shaft and a driven shaft, or other forms of driving and driven members. Indeed, for certain uses, the flexible coupling may be suitable to be used as a flexible mounting or "damper", or to be coupled solely at one end with a drive member. The flexible coupling may, therefore, be suitable for special uses e.g. as part of a laser device, in which one end of the cylindrical body is coupled with a drive member, whereas the opposite end carries a reflective surface onto which a laser beam of light can impinge.

The invention also relates, in a further aspect, to a flexible coupling of the type suitable for transmitting torque from one rotatable member to another and is particularly, though not exclusively concerned with a flexible coupling for transmitting torque between driving and driven shafts in which there may be slight misalignments in the static and / or dynamic state.

Preferably, the radial extent of the turns of the helical spring arrangement is greater at the start and at the finish than that of the turns which are intermediate the start and the finish.

By arranging for the intermediate turns of the helical spring arrangement to have a lesser radial extent than the turns at the start and the finish, it is ensured that the turns at the start and finish are stronger, and also the intermediate turns will have more resiliency, and these two factors (alone or in combination) are believed to be responsible for an axial displacement of the high stress regions away from the start and finish of the helical spring arrangement, with resultant reduction in risk of failure of the coupling at the start and finish of the helical spring arrangement.

Conveniently, the greater radial extent of the turns at the start and finish may be achieved by making the outer peripheries of the intermediate turns to be less than that of the turns at the start and finish.

Thus, by arranging for the outer periphery of the turns of the helical spring arrangement to be radially larger at the start and finish, the remaining turns define an annular waist and its dimensions can be adjusted so as to "tune" the stiffness of the coupling to meet any specific drive requirements, in addition to moving (as indicated above) the stress regions away from the connection regions (start and finish) of the spring arrangement with the end pieces or "hubs" towards a middle or intermediate region of the helical spring arrangement.

In one preferred embodiment of the invention, the spring arrangement extends continuously in a generally helical arrangement around the circumference of the cylindrical body and between a solid end piece at each end of the body i.e. both the start and the finish are each located adjacent to a respective end of the cylindrical body. However, in another embodiment, there is an intermediate solid piece, and two separate helical spring arrangements are provided, each extending continuously between a respective end piece and the intermediate solid piece.

Embodiments of flexible couplings to which the invention may be applied, will now be described in detail, by way of example only, with reference to the accompanying drawings, in which:
Figure 1 is a plan view of a first embodiment of flexible coupling according to the invention;
Figure 2 is a view, similar to Figure 1, but illustrating in more detail the path defined by one helical spring formation formed in the annular wall of the flexible coupling;
Figure 3 is a view, similar to Figure 1, of an alternative embodiment of the invention;
Figure 4 is a schematic side view of a third embodiment of flexible coupling according to the invention;
Figure 5 is a similar view of a fourth embodiment of flexible coupling according to the invention;
Figure 6 is a view similar to Figure 4, but showing one part of a helical spring arrangement thereof in emphasised outline;
Figure 7 is a view similar to Figure 5, and also showing a detailed feature thereof in emphasised outline;
As will become apparent from the subsequent detailed description of the embodiments to which the invention may be applied, there is disclosed herein a design of flexible coupling which has sufficient flexibility and resilience to meet the requirements of a "flexible coupling", and yet which is able to transmit accurately i.e. without undue torsional deformation, rotation between an input and an output end of the coupling.

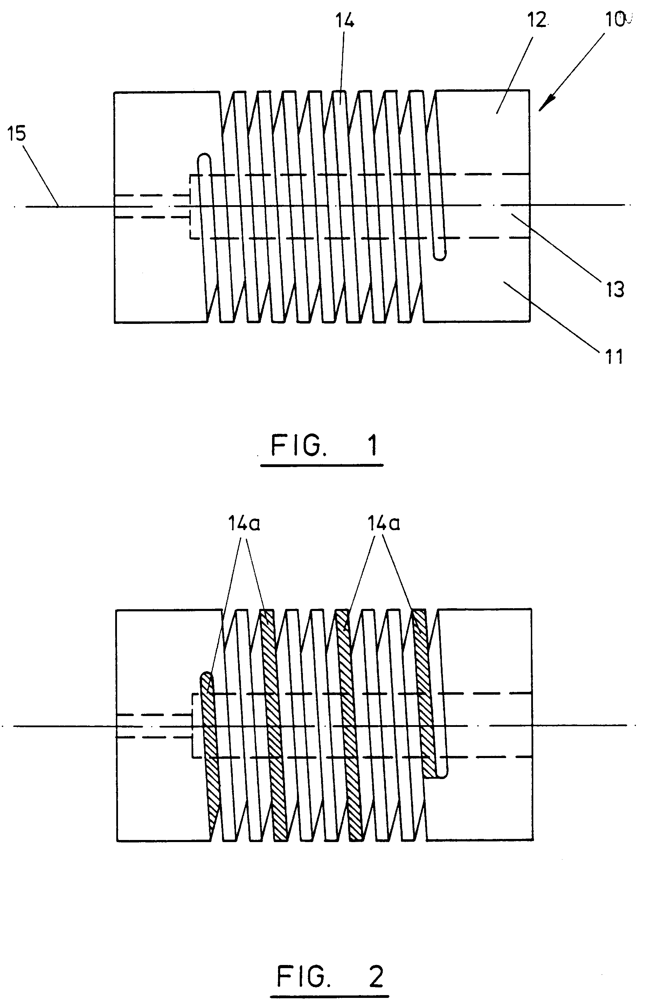

In Figure 1, the flexible coupling is designated generally by reference 10 and comprises a hollow cylindrcal body 11 having an annular wall 12. The wall 12 extends radially outwardly from a hollow interior passage 13 formed in the body 11 to the radially outer periphery of the cylindrical body 11. One end of the body 11 can function as a rotary drive input, whereas the opposite end can serve as the rotary drive output. A helical spring configuration 14 is formed in the annular wall 12, with the turns thereof each extending radially outwardly from the hollow interior 13 of the cylindrical body to the outer periphery thereof.

The helical spring configuration 14 comprises at least two separate spring formations which extend circumferentially and adjacent to each other around the axis 15 of the cylindrical body 11, with each formation extending continuously from a "start" at one end portion of the body 11 to a "finish" at an opposite end portion. As will become evident from the subsequent description with reference to Figure 2, each spring formation has its own "start" and "finish" and the start and finish of one formation is circumferentially spaced from the respective start and finish of the, or each successive and adjacent spring formation. In the embodiment shown in Figures 1 and 2, the helical spring configuration 14 comprises three separate spring formations, so that the spring configuration 14 comprises a "3-start" beam configuration.

The respective "starts" of each spring formation are angularly spaced from each other by 120^{o} and, by arranging at least two separate helical spring formations (three in the preferred embodiments) in the annular wall 12 of the cylindrical body 11, a coupling is provided which is sufficiently flexible in the sense that it can absorb any axial misalignment between an input drive to the input end of the cylindrical body and an output drive from the output end of the cylindrical body, and also any tendency for relative axial, and rotary movement between the input and output drives. However, the helical spring formation 14 is "stiffer" than the known single start helical flexible coupling, so that a more accurate, and less variable transmission of torque can take place between the input end and the output end.

Referring to Figure 2, one of the three helical spring formations provided in the helical configuration 14 is designated by reference 14a, and has its turns blacked-in for clarity. Thus, it can be seen that, between each successive turn of the formation 14a, there will be located, circumferentially adjacent, respective turns of the two other spring formations which make up the spring configuration 14. The turns of the spring configuration 14 are all integrally formed in the annular wall 12, and jointly contribute to the operating performance of the flexible coupling. It will be noted that the start and finish of the spring formation 14a are angularly separated by about 30^{o}. The respective starts and finishes of the two other spring formations are not shown in detail in the drawings, but, as indicated above, each start of one spring formation will be circumferentially spaced from the successive start of another formation by 120^{o}.

The cylindrical body 10 may be made of aluminium alloy, stainless steel, or suitable plastics, such as Acetal or Torlon, though for some uses customers are finding stainless steel to be particularly suitable. the cylindrical body 10 can be formed as a casting, and then the required spring formations can be formed by machining on a programmed machine tool. However, the required spring formations may be achieved in other ways, such as, for example, by casting or electro-forming.

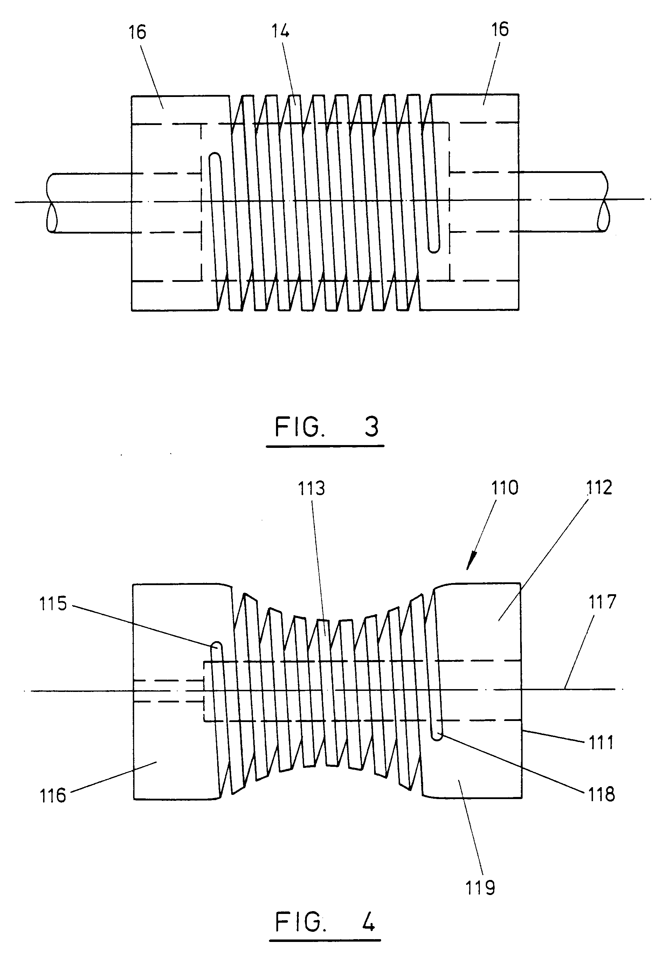

Alternatively, and as shown in Figure 3, the spring formation 14 may be formed initially by any suitable method, and then separate annular end pieces, in the form of plugs 16, can be attached in any convenient manner one to each axial end of the spring formation 14. The plugs 16 are formed so as to be capable of being coupled drivingly with a respective shaft, or other driving or driven member.

Although, not shown, it is preferred that each turn of each spring formation is wedge shaped, as seen in longitudinal section, being wider at its outer periphery than at its inner periphery. However, this is not essential, and each turn may be of uniform thickness throughout its radial extent, or reversely tapering.

Although, not shown, the construction of flexible coupling disclosed herein may be incorporated, if desired, as an integral part of a shaft or drive train.

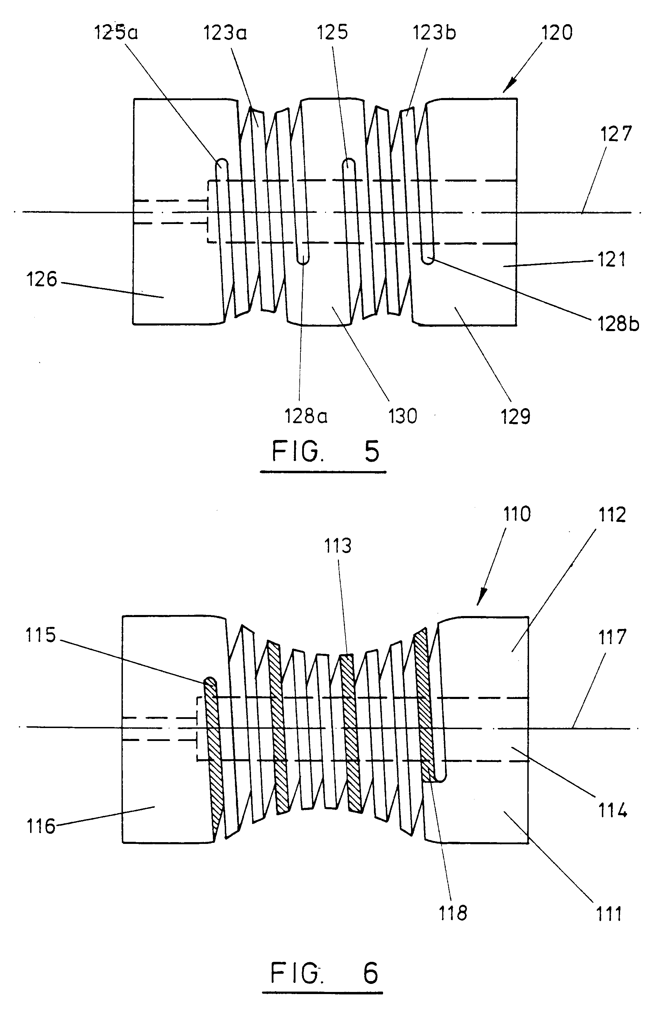

Referring now to Figures 4 and 6 of the drawings, the embodiment of flexible coupling is designated generally by reference 110 and comprises a hollow cylindrical body 111 having an annular wall 112, a rotary drive input at one end of the body and a rotary drive output at an opposite end of the body, and a helical spring arrangement 113 in the annular wall 112. The turns of the spring arrangement 113 extend radially outwardly from the hollow interior 114 of the body to the outer periphery of the body.

Further, as shown in Figures 4 and 6, the spring arrangement 113 extends circumferentially from a start 115 at one solid end piece 116 of the body 111 and about the longitudinal axis 117 of the body 111, through an angle of more than 360^{o}, to the finish 118 of the spring arrangement 113. However, it is envisaged that a satisfactory coupling may be obtained in which the angle subtends is less than 360, with a probable minimum angle of 250-250^{o}. Also, as will be evident from Figures 4 and 6, the outer periphery of the turns of the helical spring arrangement 113 has a greater radial extent at the start 115 and the finish 118, than that of the turns which are intermediate the start and the finish i.e. the spring arrangement 113 defines an annular waist. By this arrangement, it is ensured that the turns at the start and the finish are stronger, and also the intermediate turns will have more resiliency, and these two factors are believed to be responsible for an axial displacement of usual high stress regions away from the start 115 and the finish 118 of the spring arrangement.

The flexible coupling 110 may be made of any convenient material, and preferably aluminium alloy, and especially stainless steel, which is particularly suitable for some new uses of flexible couplings. The coupling may be formed as a casting or forging, and then conveniently the helical spring arrangement 113 is formed by machining, though it may also be formed by other means, such as casting, forging as one piece with the cylindrical body 111, or by electro-forming, laser machining or sintering.

In the embodiment of Figures 4 and 6, the spring arrangement 113 extends continuously in a generally helical arrangement around the circumference of the cylindrical body 111 and between the solid end piece 116 at one end and a solid end piece 119 at the opposite end. In addition, the spring formation 113 comprises an arrangement of three separate spring formations having respective turns extending circumferentially and adjacent to each other about the axis 117 of the cylindrical body 111, each formation having its own start and finish with the start and finish of one formation being circumferentially spaced by 120^{o} from the respective start and finish of the adjacent spring formation. To facilitate the understanding of the arrangement of the turns of the three separate spring formations, the path defined by the turns of one only of the three formations is shown blacked-in in Figure 6, from which it will be seen that the turns of the two other and separate spring formations are wound adjacent to and between successive turns of the illustrated formation.

Thus, the embodiment illustrated in Figures 4 and 6 is a three beam type of coupling, and having a waisted centre portion. The dimensions of the waisted portion can be selected or adjusted so as to "tune" the stiffness of the coupling to meet any specific drive requirements.

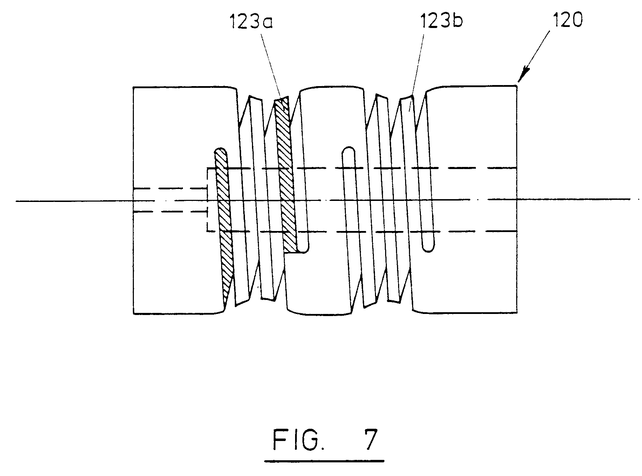

Referring now to Figures 5 and 7, an alternative embodiment is illustrated, and corresponding parts are designated by similar reference numerals, but with the addition of 10 to the corresponding parts in the embodiment of Figures 4 and 6. The flexible coupling shown in Figures 5 and 7 is designated generally by reference 120, and has two separate helical spring arrangements 123a and 123b, having respective starts and finishes 125a, 128a and 125b, 128b. The spring arrangement 123a extends continuously in a helix from its start 125a at the solid end piece 126, through an angle of more than 360^{o} about the axis 127, to its finish 128a, and the arrangement 123b extends similarly from its start 125b to its finish 128b. However, unlike the first embodiment, it will be noted that a solid intermediate piece 130 is provided, and the finish 128a of the arrangement 123a and also the start 125b of the arrangement 123b are arranged in this solid intermediate piece 130.

As shown in Figures 4 and 6, the spring arrangements 123a and 123b are each formed by "three beam type couplings" as shown and described above concerning the helical spring arrangement 113. Figure 7 illustrates in emphasised outline the path defined by one of these three spring formations for the spring arrangement 123a. Thus, the embodiment of Figures 5 and 7 is a six beam type coupling, and has similar waisted arrangement of the helical spring arrangements, with similar advantages. The coupling 120 may be made of similar material to the coupling 110, and may also be provided with the axial enlargement of the start and/or finish of each spring arrangement (not shown) in similar manner to that described above for the first embodiment.

Although, not shown, it is preferred that each turn of each spring formation is wedge shaped, as seen in longitudinal section, being wider at its outer periphery than at its inner periphery. However, this is not essential, and each turn may be of uniform thickness throughout its radial extent, or reversely tapering.

Although, not shown, the construction of flexible coupling disclosed herein may be incorporated, if desired, as an integral part of a shaft or drive train.

## Claims

1. A flexible coupling (10) which comprises a hollow body (11) having an annular wall (12), and a helical spring configuration (14) formed in the annular wall comprising at least two spring formations (14a) extending circumferentially and adjacent to each other around the axis (15) of the body (11), each formation extending in a continuous spiral from a start to a finish, the start and finish of each spring formation being joined to an end piece of the hollow body (11) comprising a solid annular wall, and the turns of the spring configuration (14) each extending radially outwardly from the hollow interior (13) of the body (11) to the outer periphery of the body (11) characterised in that the turns of the spring configuration (14) are axially thicker adjacent to said end pieces than the remaining turns thereof.

2. A flexible coupling (10) according to Claim 1, in which three helical spring formations are formed in the annular wall, and the angular separation of successive starts and finishes is 120^{o}.

3. A flexible coupling (10) according to Claim 1 or Claim 2, in which the cylindrical body (11) is made of aluminium alloy, stainless steel, plastics such as acetal or torlon, natural or synthetic rubber, or stainless steel.

4. A flexible coupling according to any one of Claims 1 to 3, in which separate end pieces (16), in the form of plugs, are attached one to each axial end of the spring formations.

5. A flexible coupling (10) according to any one of the preceding claims in which the radial extent of the turns of the helical spring configuration (14) is greater at the start and at the finish than that of the turns which are intermediate the start and finish.

6. A flexible coupling (10) according to Claim 5, in which the greater radial extent of the turns at the start and finish is achieved by making the outer peripheries of the intermediate turns to be less than that of the turns at the start and finish.

## Patentansprüche

1. Flexible Kupplung (10), die einen hohlen Körper (11) mit einer Ringwand (12) sowie eine schraubenförmige Federkonfiguration (14) umfaßt, die in der Ringwand ausgebildet ist und mindestens zwei Federgebilde (14a) umfaßt, welche sich in Umfangsrichtung und einander benachbart um die Achse (15) des Körpers (11) erstrecken und jeweils in einer kontinuierlichen Spirale von einem Anfangs- zu einem Endpunkt verlaufen, wobei der Anfangs- und Endpunkt jeden Federgebildes mit einem Endstück des hohlen Körpers (11), welches eine feste Ringwand umfaßt, verbunden ist und wobei ferner die Windungen der Federkonfiguration (14) jeweils radial vom hohlen Innenraum (13) des Körpers (11) zu dessen Außenumfang nach außen verlaufen, dadurch gekennzeichnet, daß die Windungen der Federkonfiguration (14) in der Nähe der Endstücke in axialer Richtung dicker als die übrigen Windungen sind.

2. Flexible Kupplung (10) nach Anspruch 1, bei welcher drei schraubenförmige Federgebilde in der Ringwand ausgebildet sind und der Winkelabstand aufeinanderfolgender Anfangs- und Endpunkte 120° beträgt.

3. Flexible Kupplung (10) nach Anspruch 1 oder 2, bei welcher der zylindrische Körper (11) aus Aluminiumlegierung, Edelstahl, Kunststoff wie Azetal oder Torlon, natürlichem oder synthetischem Gummi hergestellt ist.

4. Flexible Kupplung (10) nach einem der Ansprüche 1 bis 3, bei welcher getrennte Endstücke (16) in Form von Stopfen an jedem axialen Ende der Federgebilde befestigt sind.

5. Flexible Kupplung (10) nach einem der vorhergehenden Ansprüche, bei welcher die radiale Erstreckung der Windungen der schraubenförmigen Federkonfiguration (14) am Startpunkt und an den Endpunkten größer als diejenige der Windungen, die zwischen dem Anfangspunkt und dem Endpunkt liegen, ist.

6. Flexible Kupplung (10) nach Anspruch 5, bei welcher die größere radiale Erstreckung der Windungen am Startpunkt und am Endpunkt dadurch erzielt wird, daß der Außenumfang der zwischenliegenden Windungen kleiner als derjenige der Windungen am Start- und Endpunkt gemacht wird.

## Revendications

1. Accouplement élastique (10) comprenant un corps creux (11) présentant une paroi annulaire (12) et une configuration en ressort hélicoïdale (14), formée dans la paroi annulaire, comprenant au moins deux structures de ressort (14a) s'étendant circonférentiellement et de façon adajacente l'une de l'autre autour de l'axe (15) du corps (11), chaque structure s'étendant du début à la fin sous la forme d'une spirale, le début et la fin de chaque structure de ressort étant reliés à une pièce d'extrémité du corps creux (11) présentant une paroi annulaire solide et les circonvolutions de la configuration en ressort (14) s'étendant chacune radialement vers l'extérieur, de l'intérieur creux (13) du corps (11) vers la périphérie extérieure du corps (11) caractérisé en ce que les circonvolutions de la configuration en ressort (14) sont axialement plus épaisses à proximité desdites pièces d'extrémité que les circonvolutions restantes de celle-ci.

2. Accouplement élastique (10) selon la revendication 1 dans lequel trois structures en ressort hélicoïdales sont formées dans la paroi annulaire et dans laquelle l'angle de séparation entre leur début et leur fin est de 120°.

3. Accouplement élastique (10) selon la revendication 1 ou la revendication 2 dans lequel le corps cylindrique (11) est en alliage d'aluminium, en acier inoxydable, en matières plastiques telles que l'acétal ou le torlon ou en caoutchouc synthétique ou naturel.

4. Accouplement élastique selon l'une quelconque des revendications 1 à 3 dans lequel des pièces d'extrémité (16) distinctes en forme de bouchon sont liées chacune à chaque extrémité axiale des structures en ressort.

5. Accouplement élastique (10) selon l'une quelconque des revendications précédentes dans lequel le dimensionnement radial des circonvolutions de la configuration en ressort hélicoïdale est plus important au début et à la fin de celle-ci que le dimensionnement radial des circonvolutions situées entre le début et la fin de celle-ci.

6. Accouplement élastique (10) selon la revendication 5 dans lequel le dimensionnement radial important des circonvolutions du début et de la fin est effectué en dotant les circonvolutions intermédiaires de périmètres extérieurs inférieurs à ceux des circonvolutions du début et de la fin.
